# EUROPEAN PATENT APPLICATION

(11) **EP 4 621 568 A1**
(43) Date of publication of application: **24.09.2025**
(21) Application number: 24822591.4
(22) Date of filing: 04.06.2024
(51) Int. Cl.: G06F 9/455

(54) **METHOD FOR CONFIGURING CRYPTOGRAPHIC HARDWARE, CONFIDENTIAL COMPUTING METHOD FOR DATA, AND RELATED DEVICE**

(30) Priority: 15.06.2023 CN 202310712879
(71) Applicant: Hygon Information Technology Co., Ltd., Tianjin 300392 (CN)
(72) Inventor: LIU, Zixing, Tianjin 300392 (CN); YING, Zhiwei, Tianjin 300392 (CN); YANG, Ge, Tianjin 300392 (CN)
(74) Representative: Maiwald GmbH
(86) International application number: PCT/CN2024/097172
(87) International publication number: WO 2024/255640

(57) **Abstract**

Provided in the embodiments of the present disclosure are a method for configuring cryptographic hardware, a confidential computing method for data, and a related device. The method for configuring cryptographic hardware comprises: maintaining a device state of cryptographic hardware bound to a plurality of simulation devices, which device state is an idle state or a busy state, wherein one simulation device corresponds to one virtual machine, and a plurality of simulation devices are bound to the cryptographic hardware, such that the plurality of virtual machines share the cryptographic hardware by means of the corresponding simulation devices; and on the basis of the device state of the cryptographic hardware, processing a use request of a virtual machine for the cryptographic hardware by means of the simulation device corresponding to the virtual machine, such that the virtual machine uses the cryptographic hardware, wherein the virtual machine is any one of the plurality of virtual machines. The embodiments of the present disclosure can improve the utilization rate of cryptographic hardware by virtual machines.

## Description

This application claims the priority to and benefits of the Chinese Patent Application, No. 202310712879.1, which was filed on June 15, 2023. The aforementioned patent application is hereby incorporated by reference in its entirety.

### TECHNICAL FIELD

Embodiments of the present disclosure relate to a configuration method of encryption hardware, a data confidential computing method, and related devices.

### BACKGROUND

By means of Virtualization, a computer is capable of virtualizing multiple virtual machines (VM), so as to make efficient use of hardware resources of the computer. When a virtual machine performs cryptographic computing for data, such cryptographic computing involves use of encryption hardware in the computer. In this context, how to offer a technical solution to improve the virtual machine's utilization rate for encryption hardware has become a technical problem that needs to be solved urgently by those skilled in the art.

### SUMMARY

In view of this, provided in the embodiments of the present disclosure are a configuration method of encryption hardware, a data confidential computing method and related devices, aiming to improve the virtual machine's utilization rate for encryption hardware and enhance the data processing performance of the virtual machine.

In a first aspect, embodiments of the present disclosure provide a configuration method of encryption hardware, which includes:
maintaining a device state of encryption hardware bound to a plurality of emulated devices, wherein the device state comprises an idle state and a busy state; wherein one emulated device corresponds to one virtual machine, and the plurality of emulated devices are bound to the encryption hardware so that a plurality of virtual machines share the encryption hardware through corresponding emulated devices;
processing a usage request of a virtual machine for the encryption hardware through an emulated device corresponding to the virtual machine based on the device state of the encryption hardware, so that the virtual machine uses the encryption hardware, wherein the virtual machine is any one of the plurality of virtual machines.

In a second aspect, embodiments of the present disclosure provide a configuration apparatus of encryption hardware, which includes:
a state maintaining logic, configured to maintain a device state of encryption hardware bound to a plurality of emulated devices, wherein the device state comprises an idle state and a busy state; wherein one emulated device corresponds to one virtual machine, and the plurality of emulated devices are bound to the encryption hardware so that a plurality of virtual machines share the encryption hardware through corresponding emulated devices;
a request processing logic, configured to process a usage request of a virtual machine for the encryption hardware through an emulated device corresponding to the virtual machine based on the device state of the encryption hardware, so that the virtual machine uses the encryption hardware, wherein the virtual machine is any one of the plurality of virtual machines.

In a third aspect, embodiments of the present disclosure provide a data confidential computing method, which includes:
acquiring a confidential computing command for an emulated device sent by a virtual machine, wherein the emulated device is configured to emulate configuration of a secure cryptographic coprocessor, the secure cryptographic coprocessor is encryption hardware configured according to the configuration method of encryption hardware described above;
acquiring a usage permission of the secure cryptographic coprocessor so as to obtain a confidential computing result from the secure cryptographic coprocessor according to the confidential computing command and return the confidential computing result to the virtual machine.

In a fourth aspect, embodiments of the present disclosure provide a data confidential computing apparatus, which includes:
a command acquiring logic, configured to acquire a confidential computing command for an emulated device sent by a virtual machine, wherein the emulated device is configured to emulate a program of a secure cryptographic coprocessor, the secure cryptographic coprocessor is encryption hardware configured according to the configuration method of encryption hardware described above;
a hardware using logic, configured to acquire a usage permission of the secure cryptographic coprocessor so as to obtain a confidential computing result from the secure cryptographic coprocessor according to the confidential computing command and return the confidential computing result to the virtual machine.

In a fifth aspect, embodiments of the present disclosure provide a computer system, which includes: a virtual machine monitor, a plurality of virtual machines, and encryption hardware, wherein the virtual machine monitor comprises the configuration apparatus of encryption hardware described above, or the data confidential computing apparatus described above.

In a sixth aspect, embodiments of the present disclosure provide an electronic device, which includes: a memory and a processor, wherein a computer program runnable by the processor is stored on the memory, and the processor, when runs the computer program, executes steps in the configuration method of encryption hardware described above, or in the data confidential computing method described above.

In a seventh aspect, embodiments of the present disclosure provide a storage medium, and the storage medium stores one or more computer-executable instructions, when the one or more computer-executable instructions are executed, the configuration method of encryption hardware described above, and/or the data confidential computing method described above is implement.

In the encryption hardware configuration method provided in the embodiment of the present disclosure, by maintaining a device state of a cryptographic coprocessor bound to a plurality of emulated devices, the device state including an idle state and a busy state; wherein one emulated device is corresponding to one virtual machine, and the plurality of emulated device are bound to encryption hardware so that a plurality of virtual machines share the encryption hardware through the corresponding emulated devices; and further, processing a usage request of the virtual machine for the encryption hardware through the emulated device corresponding to the virtual machine based on the device state of the encryption hardware so that the virtual machine uses the encryption hardware, the virtual machine being any one of the plurality of virtual machines.

As can be seen, according to the embodiments of the present disclosure, the device state of the encryption hardware is maintained through a plurality of emulated devices so that a plurality of virtual machines can share the encryption hardware, any one of the plurality of virtual machines can use the encryption hardware for computing processing when the encryption hardware is in an idle state, and further, the usage request of the virtual machine for the encryption hardware is processed through the emulated device corresponding to the virtual machine based on the device state of the encryption hardware, thus, it can be ensured that the encryption hardware is used by one virtual machine at one moment, thereby enabling the plurality of virtual machines to share the encryption hardware for cryptographic computing processing of data, improving the virtual machine's utilization rate for the encryption hardware, and enhancing the data processing performance of the virtual machine.

### BRIEF DESCRIPTION OF DRAWINGS

For a better clarity of description of the technical solutions in the embodiments of the present disclosure, the drawings that need to be used in the embodiments will be briefly introduced below. It is apparent that the drawings described below are merely the embodiments of the present disclosure and that for those ordinary skilled in the art, other drawings may also be attained from the available drawings, without any creative effort.
Fig. 1 is a schematic diagram of an alternative architecture of a computer system;
Fig. 2 is a schematic diagram of another alternative architecture of the computer system;
Fig. 3 is a schematic diagram of yet another alternative architecture of the computer system;
Fig. 4 is a schematic diagram of an alternative architecture of encryption hardware;
Fig. 5 is an alternative encryption hardware configuration method;
Fig. 6 is an alternative flowchart of an encryption hardware configuration method according to the embodiment of the present disclosure;
Fig. 7 is a schematic diagram of access to the encryption hardware by a plurality of virtual machines according to the embodiment of the present disclosure;
Fig. 8 is a schematic interaction diagram of access to the encryption hardware by the virtual machines according to the embodiment of the present disclosure;
Fig. 9 is another alternative flowchart of the encryption hardware configuration method according to the embodiment of the present disclosure;
Fig. 10 is a schematic diagram of address mapping in access to the encryption hardware by the virtual machines according to the embodiment of the present disclosure;
Fig. 11 is a schematic interaction diagram of synchronous access to a shared memory space by the virtual machines through emulated devices according to the embodiment of the present disclosure;
Fig. 12 is a schematic diagram of address conversion in access to memory by the encryption hardware according to the embodiment of the present disclosure;
Fig. 13 is a computational timing diagram of sharing of the encryption hardware by a plurality of virtual machines according to the embodiment of the present disclosure;
Fig. 14 is an alternative block diagram of an encryption hardware configuration apparatus according to the embodiment of the present disclosure;
Fig. 15 is an alternative flowchart of a data confidential computing method according to the embodiment of the present disclosure;
Fig. 16 is a schematic interaction diagram of synchronous access to a secure cryptographic coprocessor by a plurality of virtual machines according to the embodiment of the present disclosure; and
Fig. 17 is an alternative block diagram of a data confidential computing apparatus according to the embodiment of the present disclosure.

### DETAILED DESCRIPTION

The technical solutions in the embodiments of the present disclosure will be clearly and completely described below in conjunction with the drawings in the embodiments of the present disclosure. Obviously, the embodiments described are only some of, not all of, the embodiments of the present disclosure. Based on the embodiments in the present disclosure, all other embodiments that are attained by those ordinary skilled in the art without creative effort fall within the scope of protection of the present disclosure.

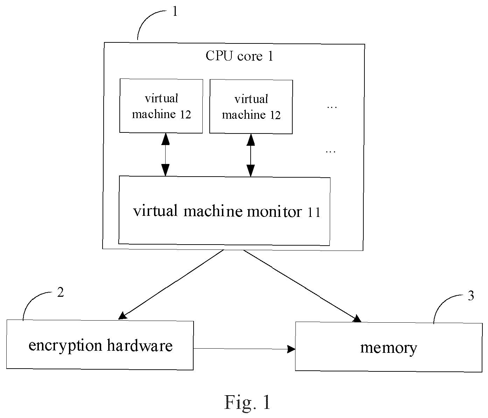

As an alternative example, Fig. 1 is a schematic diagram of an alternative architecture of a computer system. As shown in Fig. 1, the architecture of the computer system includes: a CPU (Central Processing Unit) core 1, encryption hardware 2, and memory 3.

The CPU core 1 can configure a virtual machine monitor (VMM) 11 in the form of software, and virtualize, by means of virtualization techniques, a plurality of virtual machines (VM) 12. The plurality of virtual machines 12 can be managed by the virtual machine monitor 11.

The encryption hardware 2 is a hardware device for cryptographic computing processing, such as cryptographic coprocessor. Usage of the encryption hardware 2 enables optimization for frequent data operations in cryptographic computing, shortens the computing time, increases the computing speed, and improves the cryptographic computing performance for data.

In an example, the encryption hardware 2 may be used for cryptographic computing of virtual machine data of virtual machines. When invoked by a particular virtual machine, the encryption hardware 2 may acquire a data computing command for this virtual machine, so as to obtain corresponding data from memory according to address information in this data computing command and perform cryptographic operation of data. The cryptographic operation may be encryption computing, decryption computing, Hash computing, etc. Invocation for the encryption hardware may be to drive the encryption hardware to work through a driver of the encryption hardware.

It should be noted that the encryption hardware can realize basic cryptographic computing functions when the environment in which the system architecture shown in Fig. 1 operates is a normal computing environment. However, since in the normal computing environment, the hardware resources of the encryption hardware can be directly accessed by virtual machines and no closed execution environment is present in the encryption hardware, the encryption hardware possesses no data confidential computing capability.

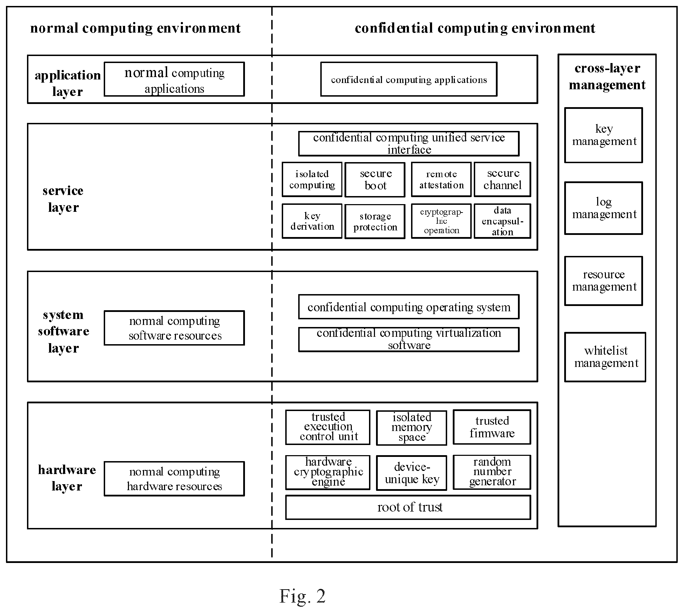

To improve the confidentiality and integrity of data and the confidentiality of computing processes, a confidential computing environment may also be set in the computer system. Fig. 2 shows a schematic diagram of another alternative architecture of the computer system, in which a longitudinal dashed line is used to distinguish the confidential computing environment from the normal computing environment, solid-line blocks are components of the confidential computing environment, and dash-line blocks are components of the normal computing environment.

As shown in Fig. 2, the computer system may include five parts: a hardware layer, a system software layer, a service layer, an application layer, and cross-layer management, wherein the hardware layer is based on hardware isolation to ensure that protected resources are not accessed by an open system, and provides a trusted hardware foundation for confidential computing based on hardware security functions; the system software layer provides a software-based isolation mechanism, necessary hardware resources, and basic services for confidential computing; the service layer provides a unified confidential computing service interface and security service for upper-layer applications, with the security service being formed by interaction between underlying system software and hardware and management modules, and the unified confidential computing service interface being used to shield the differences in development interfaces of the underlying hardware architecture and software; the application layer is an application that directly faces the result demander, which performs computing operations through an application; the cross-layer management provides necessary management modules for execution of confidential computing businesses.

In an example, the components of the hardware layer in the confidential computing environment may mainly include a trusted execution control unit, isolated memory space, trusted firmware, a hardware cryptographic engine, a device-unique key, a random number generator, and root of trust; the components of the system software layer may mainly include a confidential computing operating system and confidential computing virtualization software; the components of the service layer may mainly include a confidential computing unified service interface, isolated computing, secure boot, remote attestation, secure channels, key derivation, storage protection, cryptographic operation, and data encapsulation; the components of the application layer may mainly include confidential computing applications; and the components of the cross-layer management may mainly include key management, log management, whitelist management, and resource management.

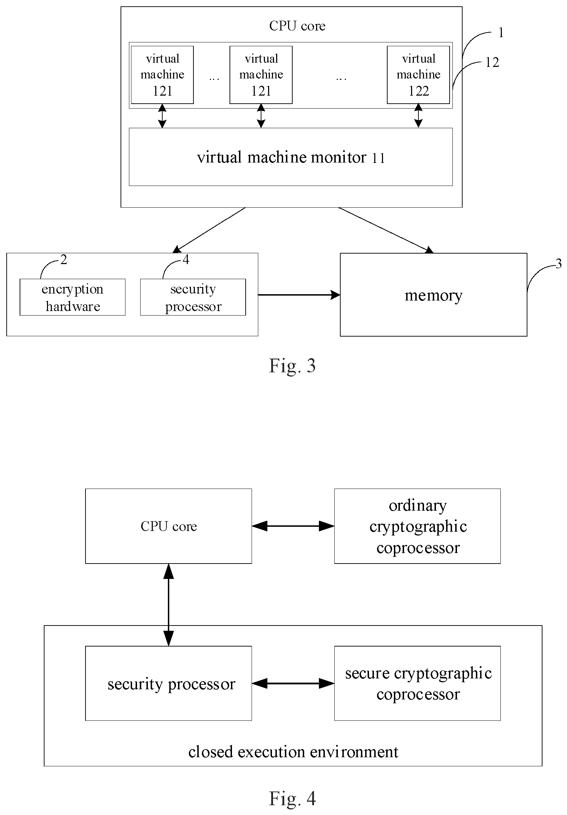

It should be noted that among the components of the hardware layer in the confidential computing environment, the trusted firmware may be, for example, a security processor. In a trusted execution environment in which virtual machines are implemented, Fig.3 schematically shows a schematic diagram of yet another alternative architecture of the computer system. Corresponding to Fig. 1 and as shown in Fig. 3, the system architecture may also include a security processor 4, and the security processor 4 is a processor specially set up to handle operations related to confidential computing of the virtual machines. For example, the security processor 4 may carry out operations such as memory encryption and decryption, thereby avoiding access to and tempering of the data in the virtual machines by a physical host and the virtual machine monitor 11 and further guaranteeing data security in the virtual machines.

The environment in which the system architecture shown in Fig. 3 operates may include the confidential computing environment, the security processor has a closed executable environment, and the virtual machine monitor 11 may be configured with an API interface in communication with the security processor 4, to achieve data interaction between the virtual machine monitor 11 and the security processor 4.

In order to further ensure data security in the virtual machines from the perspective of hardware and increase the confidentiality and integrity of data, in a case where the computer system includes the confidential computing environment and the normal computing environment, different encryption hardware may exist accordingly. As shown in Fig. 4, which is a schematic diagram of an alternative architecture of encryption hardware, the encryption hardware may be further set as an ordinary cryptographic coprocessor and a secure cryptographic coprocessor that are isolated from each other.

The ordinary cryptographic coprocessor may also be called a high-performance cryptographic coprocessor, which is hardware for basic cryptographic computing for the virtual machine, and the hardware resources of the ordinary cryptographic coprocessor can be directly accessed by the CPU core and applied in the normal computing environment; the secure cryptographic coprocessor is hardware for confidential computing for the virtual machine, and the secure cryptographic coprocessor and the security processor can use the closed execution environment, so that the hardware resources of the secure cryptographic coprocessor cannot be directly accessed by the virtual machine, and can be configured by the security processor and used when the virtual machine performs a confidential computing task with high security level and requirements, thus realizing confidential computing for data of the virtual machine and ensure that there is no leakage of confidential data.

It should be noted that as shown in Fig. 3, the virtual machines 12 in the CPU core 1 may include a virtual machine 121 and a virtual machine 122, wherein the virtual machine 121 is a virtual machine that uses no security protection mechanism in the normal computing environment, such as an ordinary virtual machine that uses ordinary memory; the virtual machine 122 is a virtual machine that uses the security protection mechanism in the confidential computing environment, such as a secure virtual machine that uses secure memory. In addition, the secure virtual machine has higher security than that of the ordinary virtual machine, the security processor 4 may allocate secure memory to the secure virtual machine and maintain a nested page table in the secure virtual machine, preventing the host operating system, the virtual machine monitor, etc., from learning about usage of the secure memory and also reducing the risk of the virtual machines being attacked.

It can be understood that a computer can virtualize a plurality of virtual machines by means of virtualization techniques, that in Trusted Execution Environments (TEE) in which virtual machines are implemented, i.e., the normal computing environment and the confidential computing environment, although the encryption hardware may include the ordinary cryptographic coprocessor and the secure cryptographic coprocessor, the number of the encryption hardware is far less than the number of the virtualized virtual machines, and that simultaneous use of the encryption hardware by the plurality of virtual machines will result in a hardware resource conflict for the encryption hardware.

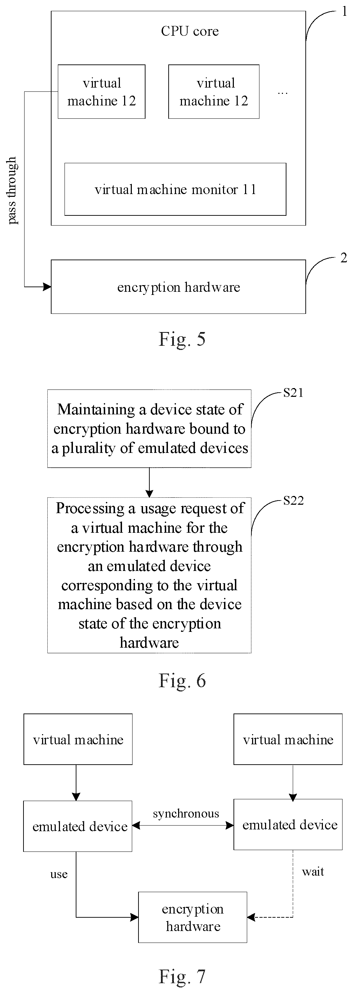

Therefore, to enable use, by the virtual machine, of the encryption hardware for cryptographic computing or confidential computing, as an alternative implementation and as shown in Fig. 5, the encryption hardware may be passed through to, and used by, any one of the plurality of virtual machines, e.g., in the normal computing environment, one ordinary cryptographic coprocessor is passed through to, and used by, one ordinary virtual machine, or in the confidential computing environment, the secure cryptographic coprocessor is passed through to, and used by, one secure virtual machine. With such pass-through to the encryption hardware of the virtual machine, the data computing task sent by the virtual machine is acquired and executed, and the passed-through virtual machine is notified through interruption upon completion of the computing, thereby saving the computing bandwidth in CPU.

However, the inventor has found during data processing that the encryption hardware can only be used by the passed-through virtual machine and cannot be used by other virtual machines or the host operating system, as a result of which the virtual machines cannot efficiently use the encryption hardware to realize the computing function and the data processing performance of the virtual machines is lowered.

It thus can be seen that how to improve the virtual machine's utilization rate for the encryption hardware appears to be particularly important. On this basis, through an improved technical solution according to the embodiment of the present disclosure, a plurality of emulated devices of a virtual machine monitor are utilized to maintain the device state of the encryption hardware, so that a plurality of virtual machines can share the encryption hardware; in addition, a usage request of the virtual machine for the encryption hardware is processed through the emulated device corresponding to the virtual machine based on the device state of the encryption hardware, so that any one of the plurality of virtual machines uses the encryption hardware for cryptographic computing, thereby improving the virtual machine's utilization rate for the encryption hardware and enhancing the data processing performance of the virtual machines

Based on the above idea, Fig. 6 schematically shows an alternative flowchart of an encryption hardware configuration method according to the embodiment of the present disclosure. This method flow may be realized by a virtual machine monitor, the virtual machine monitor may create a plurality of emulated devices through an emulated device layer when virtual machines are started, the emulated devices are used to emulate configuration of the encryption hardware, one emulated device is corresponding to one virtual machine, a usage relationship needs to be established through the corresponding emulated device in case of use of the encryption hardware by the virtual machine, and the virtual machine monitor can specify the encryption hardware to which the emulated devices are bound. By reference to Fig. 6, this method flow may include the following steps.

S21: maintaining a device state of encryption hardware bound to a plurality of emulated devices.

One emulated device layer is added to the virtual machine monitor in the embodiment of the present disclosure, sharing of the cryptographic coprocessor by a plurality of virtual machines is realized through the emulated device layer so that the plurality of virtual machines can concurrently access the encryption hardware for data processing, and use of the mode of pass-through in which the encryption hardware is passed-through to a single virtual machine is avoided.

A plurality of emulated devices are set based on the emulated device layer, the emulated devices may be configuration for emulating the encryption hardware, one emulated device is corresponding to one virtual machine, and the plurality of emulated devices are bound to the encryption hardware so that the virtual machines no longer directly access the encryption hardware and instead access the corresponding emulated device, making the plurality of virtual machines share the encryption hardware through the corresponding emulated devices.

Fig. 7 schematically shows a schematic diagram of access to the encryption hardware by a plurality of virtual machines according to the embodiment of the present disclosure. As shown in Fig. 7, the plurality of virtual machines access the corresponding emulated devices and share the encryption hardware through the corresponding emulated devices. **In** Fig. 7, mutual synchronous operations are performed among the plurality of emulated devices to control access to the encryption hardware by the virtual machines, and when one virtual machine uses the encryption hardware through the emulated device, another virtual machine needs to wait for completion of execution of the encryption hardware.

In some embodiments, there may be a shared memory space that corresponds to the virtual machine monitor, wherein the shared memory space may be configured to allow the plurality of emulated devices to read and write, the plurality of emulated devices may store the device state of the encryption hardware bound thereto, in the shared memory space so that the device state of the encryption hardware bound to the plurality of emulated devices can be recorded in the shared memory space, and also the plurality of emulated devices can share the device state of the encryption hardware based on access to the shared memory space.

The device state may include an idle state and a busy state of the encryption hardware, wherein the encryption hardware being in the idle state means that the encryption hardware does not perform cryptographic computing processing and can be used by any virtual machine; the encryption hardware being in the busy state means that the encryption hardware is currently being used by a particular virtual machine to perform cryptographic computing processing, and cannot be used by other virtual machines than the virtual machine that is currently using it. Use of the encryption hardware by the virtual machine requires the corresponding emulated device, so by maintaining the device state of the encryption hardware bound to the plurality of emulated devices, the plurality of virtual machines can share the encryption hardware through the corresponding emulated devices.

S22: processing a usage request of a virtual machine for the encryption hardware through an emulated device corresponding to the virtual machine based on the device state of the encryption hardware.

On the basis that the device state of the encryption hardware includes the idle state and the busy state, when any one of the plurality of virtual machines needs to use the encryption hardware for cryptographic computing, the virtual machine monitor may process the usage request of the virtual machine for the encryption hardware through the emulated device corresponding to the virtual machine.

As an alternative implementation, the virtual machine may query the device state of the encryption hardware based on the corresponding emulated device, so as to determine the timing at which the usage request for the encryption hardware is sent. In an example, if the device state of the encryption hardware queried by the emulated device is the idle state, then the usage request that the virtual machine requests to use the encryption hardware may be acquired through the emulated device corresponding to the virtual machine and a response is further made to this usage request through the emulated device corresponding to the virtual machine, so that the virtual machine uses the encryption hardware to realize use of the encryption hardware by the virtual machine.

It can be understood that in virtualization techniques, the encryption hardware is used for cryptographic computing processing of the virtual machine data of a virtual machine, and that since the virtual machine data is corresponding to a Guest Physical Address (GPA) in a virtual machine address space and the virtual machine data processed by the encryption hardware is corresponding to a Host Physical Address (HPA) in a memory address space, the encryption hardware needs to find the corresponding data in memory according to the host physical address. Therefore, before the encryption hardware acquires a computing command from the virtual machine, a mapping relationship of the guest physical address of the virtual machine address space to the host physical address of the memory address space needs to be obtained, and this mapping relationship is mainly recorded through an input/output (I/O) page table.

It should be noted that the emulated device in the embodiments of the present disclosure may maintain the I/O page table that records the mapping relationship of the guest physical address of the virtual machine address space to the host physical address of the memory address space. Therefore, a response may be made to the usage request by the first emulated device so that the first virtual machine uses the encryption hardware.

In an alternative implementation, the response made to the usage request of the first virtual machine by the first emulated device may be to set the I/O page table of the first virtual machine to an input/output memory management unit (IOMMU) so that the encryption hardware can acquire a computing command sent by the virtual machine, wherein the computing command may carry the guest physical address. Upon acquisition of the computing command, the encryption hardware can translate the guest physical address in the computing command into the host physical address through IOMMU, to obtain corresponding target data in memory for computing purposes.

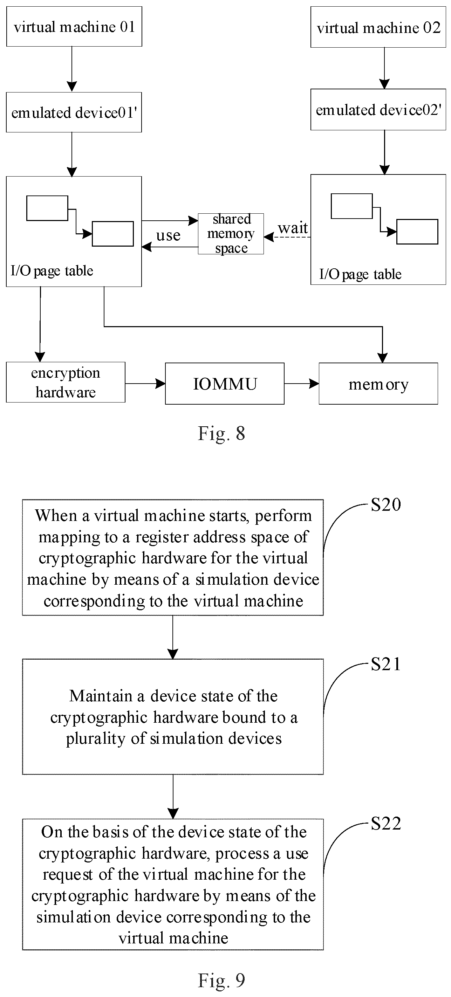

Fig. 8 schematically shows a schematic interaction diagram of access to the encryption hardware by the virtual machines according to the embodiment of the present disclosure. As shown in Fig. 8, virtual machines 01 and 02 access the device state of the encryption hardware recorded in the shared memory space through corresponding emulated devices 01' and 02', respectively; when the emulated device 01' learns in the shared memory space that the device state of the encryption hardware is the "idle state", the device state of the encryption hardware recorded in the shared memory space is adjusted to the "busy state" and the encryption hardware is used, while the emulated device 02' needs to wait for completion of execution of the encryption hardware. Further, the virtual machine 01 adjusts, through the emulated device 01', the device state recorded in the shared memory space, enabling use of the encryption hardware; the emulated device 01' sets the I/O page table to IOMMU, and the encryption hardware translates the guest physical address into the host physical address based on IOMMU, to obtain corresponding data in memory for computing purposes.

It thus can be seen that according to the embodiments of the present disclosure, the device state of the encryption hardware is maintained through a plurality of emulated devices so that a plurality of virtual machines can share the encryption hardware and further, the usage request of the virtual machine for the encryption hardware is processed through the emulated device corresponding to the virtual machine based on the device state of the encryption hardware. Thus, it can be ensured that the encryption hardware is used by one virtual machine at one moment, thereby enabling a plurality of virtual machines to share the encryption hardware for cryptographic computing processing of data, improving the virtual machine's utilization rate for the encryption hardware, and enhancing the data processing performance of the virtual machine.

In some embodiments, on the basis that the virtual machine no longer directly accesses the encryption hardware and instead accesses the corresponding emulated device, use of the encryption hardware by the virtual machine may be realized through the corresponding emulated device. By taking any one (e.g., the first virtual machine) of a plurality of virtual machines as an example, after the first virtual machine learns that the device state of the encryption hardware queried by the corresponding first emulated device is the idle state, the first virtual machine can send, to the corresponding first emulated device, a usage request for requesting to use the encryption hardware, and thus the usage request that the first virtual machine requests to use the encryption hardware can be acquired through the first emulated device corresponding to the first virtual machine. **In** addition, with the first emulated device making a response to the usage request, the first virtual machine uses the encryption hardware.

Further in some embodiments, on the basis that the emulated device maintains the device state of the encryption hardware bound thereto, when the first virtual machine uses the encryption hardware, the device state of the encryption hardware may be adjusted to the busy state through the first emulated device corresponding to the first virtual machine so that a second virtual machine stops sending a usage request until the device state of the encryption hardware is adjusted to the idle state, wherein the second virtual machine is a virtual machine different from the first virtual machine, among the plurality of virtual machines.

It can be understood that after the first emulated device makes a response to the usage request for the encryption hardware from the first virtual machine, the first virtual machine can use the encryption hardware for cryptographic computing processing of data, and that in order to avoid a hardware resource conflict for the encryption hardware caused by simultaneous use of the encryption hardware by other virtual machines, the device state of the encryption hardware in the idle state may be adjusted to the busy state through the first emulated device. Further, when the first virtual machine uses the encryption hardware, the device state of the encryption hardware queried by the emulated devices corresponding to other virtual machines is the busy state so that other virtual machines stop sending the usage request for the encryption hardware to the corresponding emulated devices, until the first virtual machine finishes using the encryption hardware. When the first virtual machine finishes using the encryption hardware, the device state of the encryption hardware may be adjusted to the idle state through the first emulated device corresponding to the first virtual machine, and the usage request for the encryption hardware can be sent to the corresponding emulated devices only when the device state of the encryption hardware queried by other virtual machines through the corresponding emulated devices is the idle state, so that in case that the encryption hardware is ensured to be used by one virtual machine at one moment, sharing, by a plurality of virtual machines, of the encryption hardware for cryptographic computing processing of data can be realized in such a manner that the encryption hardware is used by any virtual machine when the encryption hardware is in the idle state.

In some embodiments, with a plurality of emulated devices reading and writing the device state of the encryption hardware bound thereto, maintenance for the device state of the encryption hardware bound to the plurality of emulated devices may be realized based on a shared memory space. The device state of the encryption hardware bound to the plurality of emulated devices may be recorded in the shared memory space so that a plurality of virtual machines can access the shared memory space through the corresponding emulated devices, share the device state of the encryption hardware and thus share the encryption hardware for cryptographic computing processing of data.

As an alternative implementation, based on the shared memory space, adjusting the device state of the encryption hardware to the busy state through the first emulated device corresponding to the first virtual machine may be that the device state of the encryption hardware recorded in the shared memory space may be adjusted to the busy state through the first emulated device corresponding to the first virtual machine, so that other virtual machines can stop sending the usage request for the encryption hardware, thereby avoiding other virtual machines from sending the invalid usage request for the encryption hardware as well as resource conflicts.

As another alternative implementation, when the first virtual machine finishes using the encryption hardware, the device state of the encryption hardware recorded in the shared memory space may be adjusted to the idle state through the first emulated device corresponding to the first virtual machine, so that other virtual machines can send the usage request for the encryption hardware and utilize the encryption hardware to execute cryptographic computing processing of data.

In some embodiments, to enable use of the encryption hardware by a plurality of virtual machines, the guest physical addresses of the plurality of virtual machines need to be mapped to a register space of the encryption hardware and thus a mapping relationship of the virtual machine in an address space of the encryption hardware needs to be established. Fig. 9 schematically shows another alternative flowchart of the encryption hardware configuration method according to the embodiment of the present disclosure. As shown in Fig. 9, prior to S21, the following step may further be included.

S20: mapping a register address space of the encryption hardware for the virtual machine through the emulated device corresponding to the virtual machine when the virtual machine is started.

It can be understood that on the basis that the virtual machine no longer directly accesses the cryptographic coprocessor and instead accesses the emulated device, the register address space of the encryption hardware may be mapped for the virtual machine through the emulated device corresponding to the virtual machine. In addition, since the emulated device is created by the virtual machine monitor when the virtual machine is started, the timing at which the register address space of the encryption hardware is mapped for the virtual machine through the emulated device corresponding to the virtual machine may also be the timing at which the virtual machine is started, which is to say when the virtual machine is started, the register address space of the encryption hardware is mapped for the virtual machine through the emulated device corresponding to the virtual machine.

As an alternative implementation, on the basis that the virtual machine no longer directly accesses the encryption hardware and instead accesses the emulated device, the virtual machine, when started, may send to the emulated device a request for querying the register address of the encryption hardware, i.e., when the virtual machine is started, a query request for the register address space of the encryption hardware from the virtual machine is acquired through the emulated device corresponding to the virtual machine. Further, the address information of the register address space is queried through the corresponding emulated device and the register address space of the encryption hardware is mapped for the virtual machine according to the queried address information of the register address space.

Further in an example, mapping the register address space of the encryption hardware for the virtual machine according to the queried address information of the register address space may be establishing a nested page table according to the address information of the register address space, and the nested page table is used to record mapping of the guest physical address of the virtual machine to the address space of the cryptographic processor.

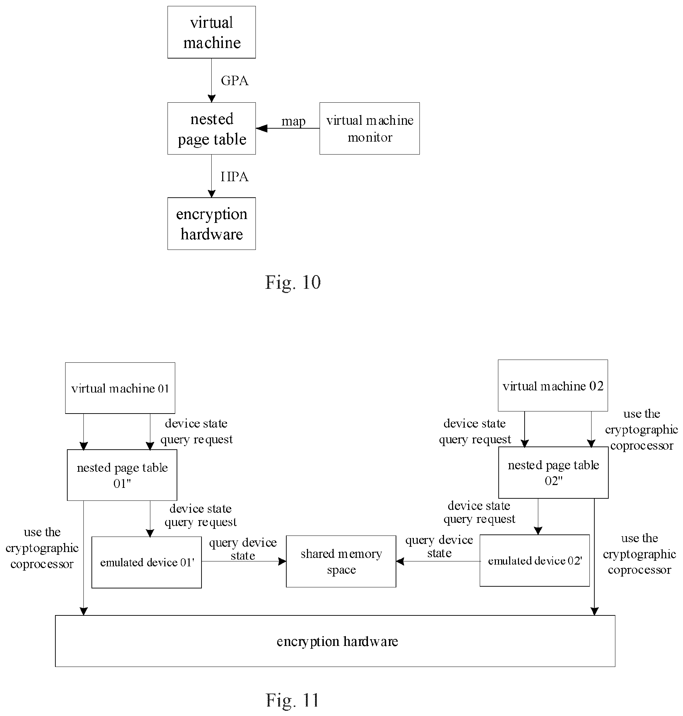

It should be noted that one virtual machine establishes the nested page table through the corresponding emulated device so that before the virtual machine uses the encryption hardware, the physical address that is corresponding to the guest physical address in the address space of the encryption hardware is obtained according to the nested page table, and further, the virtual machine can query, in the shared memory space through the emulated device, the device state corresponding to the encryption hardware and use the encryption hardware. Fig. 10 schematically shows a schematic diagram of address mapping in access to the encryption hardware by the virtual machines. As shown in Fig. 10, the virtual machine monitor establishes the nested page table and the guest physical address of the virtual machine is mapped to the register space of the encryption hardware, so that the virtual machine can utilize the nested page table to query the physical address of the guest physical address in the register space of the encryption hardware, thus enabling access to the encryption hardware.

Based on the established nested page table, Fig. 11 schematically shows a schematic interaction diagram of synchronous access to a shared memory space by the virtual machines through emulated devices. As shown in Fig. 11, virtual machines 01 and 02 query the mapping relationship of the guest physical addresses of the virtual machines to the address space of the encryption hardware recorded in the corresponding nested page tables, respectively, in order to send a device state query request to corresponding emulated devices 01' and 02'; the device state of the encryption hardware is queried in the shared memory space through the corresponding emulated devices 01' and 02'; when the current device state of the encryption hardware queried by the corresponding emulated devices 01' and 02' is the "idle state", the device state in the shared memory space is adjusted to the "busy state" through the corresponding emulated devices 01' and 02' according to the mapping relationship of the guest physical addresses of the virtual machines to the address space of the encryption hardware recorded in the corresponding nested page table 01" or 02", thus enabling the corresponding virtual machine 01 or 02 to use the encryption hardware.

In some embodiments, when the virtual machine uses the encryption hardware to perform data computing, the encryption hardware needs to acquire the host physical address corresponding to the guest physical address of the virtual machine, through the input/output memory management unit. Therefore, on the basis that an input/output page table may record the mapping relationship of the guest physical address of the virtual machine to the host physical address, the input/output page table of the first virtual machine may be written into the input/output memory management unit through the first emulated device, and the input/output page table records the address mapping relationship of the guest physical address to the host physical address, so that the first virtual machine, when using the cryptographic coprocessor for computing, queries the host physical address according to the input/output page table so as to acquire, in memory, the target data to be processed and perform computing, followed by returning a computing result to the first virtual machine.

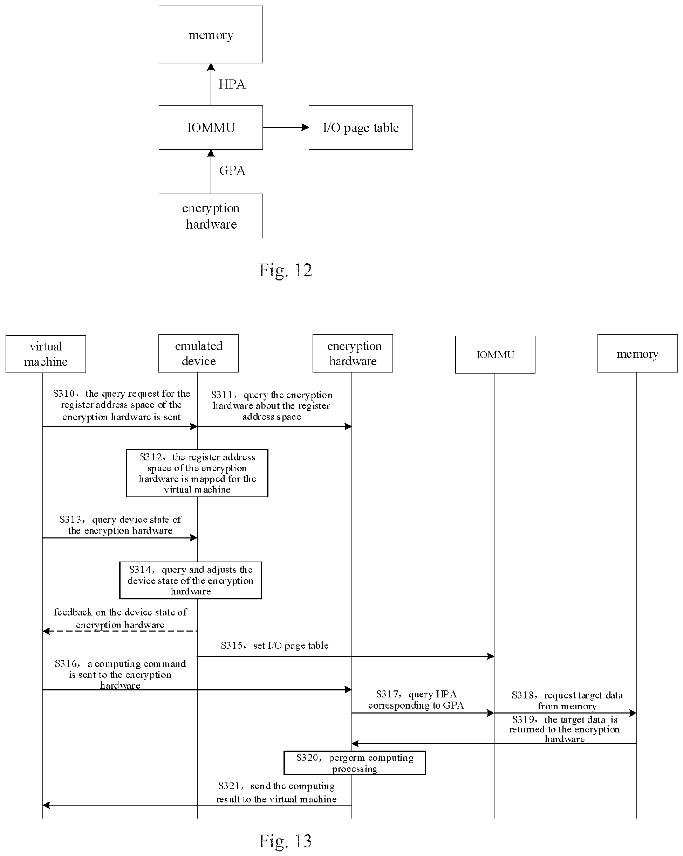

It should be noted that the virtual machine monitor may enable an IOMMU function to establish the I/O page table for the encryption hardware and provide the mapping relationship of the guest physical address to the host physical address, so that the encryption hardware can access the host physical memory through the I/O page table. Fig. 12 schematically shows a schematic diagram of address conversion in access to memory by the encryption hardware. As shown in Fig. 12, when the virtual machine uses the encryption hardware to initiate computing, the encryption hardware can acquire the guest physical address (GPA) of data sent by the virtual machine, so the encryption hardware can query the I/O page table through IOMMU, translate GPA into the host physical address (HPA), and access memory data.

For easy of understanding of the above content, Fig. 13 schematically shows a computational timing diagram of sharing of the encryption hardware by a plurality of virtual machines according to the embodiment of the present disclosure. As shown in Fig. 13, when the virtual machine is started, S310 is executed: the query request for the register address space of the encryption hardware is sent to the emulated device; the emulated device acquires the query request from the virtual machine to further execute S311: the emulated device queries the encryption hardware about the register address space, and in an alternative example, the emulated device may feed address information back to the virtual machine after querying the register address space of the encryption hardware, so that the virtual machine obtains the register address space of the encryption hardware; the emulated device executes S312: the register address space of the encryption hardware is mapped for the virtual machine to finish mapping of the virtual machine and the register address space of the encryption hardware. During operation of the virtual machine, the virtual machine executes S313: the virtual machine queries the emulated device about the device state of the encryption hardware; the emulated device acquires this query request and executes S314: the emulated device queries and adjusts the device state of the encryption hardware in the shared memory space, and in an alternative example, the emulated device can feed the device state of the encryption hardware back to the virtual machine after querying the device state of the encryption hardware (the step shown by the dotted arrow in the drawing); when the emulated device learns that the device state of the encryption hardware is the idle state, the emulated device executes S315: an I/O page table recording the mapping relationship of GPA to HPA is set to IOMMU, so that the virtual machine can execute S316: a computing command is sent to the encryption hardware, wherein the computing command carries GPA; the encryption hardware acquires the computing command and executes S317: IOMMU is queried about HPA corresponding to GPA; based on the corresponding HPA, S318 can be executed: target data is requested from memory; further, S319 is executed: the target data corresponding to HPA is returned to the encryption hardware by memory; the encryption hardware acquires the target data and executes S320: computing processing is performed on the target data; further, upon acquisition of a computing result, S321 is executed: the encryption hardware sends the computing result to the virtual machine.

In some embodiments, based on the normal computing environment and the confidential computing environment in the architecture of the computer system shown in Fig. 2, the encryption hardware may include an ordinary cryptographic coprocessor and/or a secure cryptographic coprocessor, wherein the ordinary cryptographic coprocessor is used to execute a normal computing task in a normal computing environment; and the secure cryptographic coprocessor is configured to execute a confidential computing task in a confidential computing environment.

As an alternative implementation, the normal computing environment may be isolated from the confidential computing environment, the normal computing environment is used to execute the normal computing task, and the confidential computing environment is used to execute the confidential computing task.

It should be noted that the encryption hardware configuration method according to the embodiment of the present disclosure is suitable not only for the ordinary cryptographic coprocessor, but also for cases where there are one or more secure cryptographic coprocessors in the confidential computing environment, wherein when this method is suitable for a secure cryptographic coprocessor, messages need to be transferred to the secure cryptographic coprocessor via a security processor based on data security.

As can be seen, according to the embodiments of the present disclosure, the device state of the encryption hardware is maintained through a plurality of emulated devices so that a plurality of virtual machines can share the encryption hardware, any one of the plurality of virtual machines can use the encryption hardware for computing processing when the encryption hardware is in the idle state, and further, the usage request of the virtual machine for the encryption hardware is processed through the emulated device corresponding to the virtual machine based on the device state of the encryption hardware. Thus, it can be ensured that the encryption hardware is used by one virtual machine at one moment, thereby enabling the plurality of virtual machines to share the encryption hardware for cryptographic computing processing of data, improving the virtual machine's utilization rate for the encryption hardware, and enhancing the data processing performance of the virtual machine.

The encryption hardware configuration apparatus provided in the embodiment of the present disclosure will be introduced below. The content of the apparatus described hereinafter may be considered as the virtual machine monitor being a functional module required to be set to implement the encryption hardware configuration method according to the embodiment of the present disclosure. The content described hereinafter can be cross-referenced with the content described hereinabove.

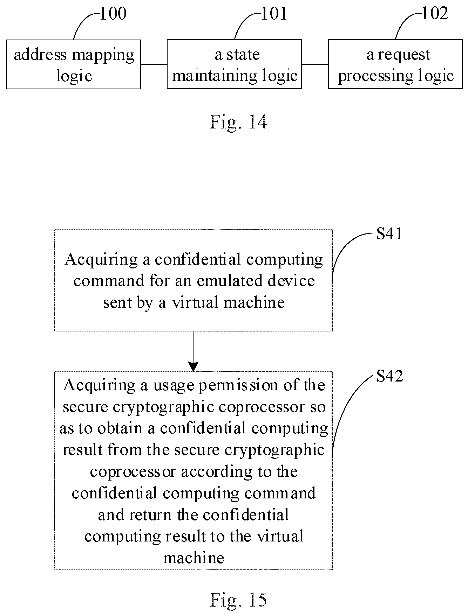

As an alternative implementation, Fig. 14 schematically shows an alternative block diagram of an encryption hardware configuration apparatus according to the embodiment of the present disclosure. This apparatus may be applied to a virtual machine monitor. With reference to Fig. 14, this apparatus may include: a state maintaining logic 101 and a request processing logic 102.

The state maintaining logic 101 is used to maintain a device state of encryption hardware bound to a plurality of emulated devices, the device state includes an idle state and a busy state; wherein one emulated device is corresponding to one virtual machine, and the plurality of emulated device are bound to the encryption hardware so that a plurality of virtual machines share the encryption hardware through the corresponding emulated devices.

The request processing logic 102 is used to process a usage request of a virtual machine for the encryption hardware through an emulated device corresponding to the virtual machine based on the device state of the encryption hardware, so that the virtual machine uses the encryption hardware, and the virtual machine is any one of the plurality of virtual machines.

Alternatively, the step that the request processing logic 102 is used to process a usage request of a virtual machine for the encryption hardware through an emulated device corresponding to the virtual machine based on the device state of the encryption hardware includes:
acquiring, if the device state of the encryption hardware is the idle state, a usage request of a first virtual machine for requesting usage of the encryption hardware through a first emulated device corresponding to the first virtual machine; the first virtual machine being any one of the plurality of virtual machines; and
making a response to the usage request through the first emulated device so that the first virtual machine uses the encryption hardware.

Alternatively, this step further includes: adjusting the device state of the encryption hardware to the busy state through the first emulated device so that a second virtual machine stops sending a usage request until the device state of the encryption hardware is adjusted to the idle state; wherein the second virtual machine is a virtual machine different from the first virtual machine, among the plurality of virtual machines.

Specifically, the state maintaining logic 101 is used to execute the aforesaid encryption hardware configuration method.

Further, as a counterpart to the aforesaid encryption hardware configuration method, an address mapping logic 100 may be further set in the encryption hardware configuration apparatus, and is used to map a register address space of the encryption hardware for the virtual machine through the emulated device corresponding to the virtual machine when the virtual machine is started.

Alternatively, the step of maintaining a device state of encryption hardware bound to a plurality of emulated devices in the state maintaining logic 101 includes:
recording the device state of the encryption hardware bound to the plurality of emulated devices in a shared memory space, wherein the shared memory space is configured to allow the plurality of emulated devices to read and write.

Alternatively, the step of adjusting the device state of the encryption hardware to the busy state through the first emulated device corresponding to the first virtual machine in the state maintaining logic 101 includes:
adjusting the device state of the encryption hardware recorded in the shared memory space to the busy state through the first emulated device corresponding to the first virtual machine.

Alternatively, the state maintaining logic 101 is also used to adjust the device state of the encryption hardware recorded in the shared memory space to the idle state through the first emulated device corresponding to the first virtual machine when the first virtual machine finishes using the encryption hardware.

Alternatively, the step that the address mapping logic 100 is used to map a register address space of the encryption hardware for the virtual machine through the emulated device corresponding to the virtual machine when the virtual machine is started may include:
acquiring a query request of the virtual machine for the register address space of the encryption hardware through the emulated device corresponding to the virtual machine when the virtual machine is started; and
querying address information of the register address space through the emulated device corresponding to the virtual machine, and mapping the register address space of the encryption hardware for the virtual machine according to the address information of the register address space that is queried.

Alternatively, the step of mapping the register address space of the encryption hardware for the virtual machine according to the queried address information of the register address space may include:
establishing a nested page table according to the address information of the register address space, the nested page table being used to record mapping from a guest physical address of the virtual machine to an address space of the encryption hardware.

Alternatively, the step that the state maintaining logic 101 makes a response to the usage request through the first emulated device so that the first virtual machine uses the encryption hardware may include:
writing an input/output page table of the first virtual machine into an input/output memory management unit through the first emulated device, wherein the input/output page table records an address mapping relationship from a guest physical address to a host physical address.

The embodiments of the present disclosure also provide a data confidential computing method in a confidential computing environment, wherein a secure cryptographic coprocessor in this confidential computing environment may be encryption hardware that is configured according to the above-described encryption hardware configuration method. Driven by the technical idea of the present disclosure, Fig. 15 shows an alternative flowchart of the data confidential computing method according to the embodiment of the present disclosure. This method flow may be realized by virtual machine monitors. As shown in Fig. 15, this method flow may include the following steps.

S41: acquiring a confidential computing command for an emulated device sent by a virtual machine.

One emulated device layer is added to the virtual machine monitor in the embodiments of the present disclosure, emulated devices used to emulate configuration corresponding to a secure cryptographic coprocessor is created through the emulated device layer, the secure cryptographic coprocessor may be encryption hardware that is configured according to the aforesaid encryption hardware configuration method. Therefore, the virtual machine can send the confidential computing command directly to the emulated device to avoid using the mode of pass-through in which the secure cryptographic coprocessor is passed-through to the virtual machine, and then the virtual machine monitor can acquire the confidential computing command for the emulated device sent by the virtual machine.

The confidential computing command is used to instruct the secure cryptographic coprocessor to perform confidential computing of data.

S42: acquiring a usage permission of the secure cryptographic coprocessor so as to obtain a confidential computing result from the secure cryptographic coprocessor according to the confidential computing command and return the confidential computing result to the virtual machine.

In the embodiments of the present disclosure, the virtual machine monitors of different virtual machines may synchronously negotiate on use of the secure cryptographic coprocessor. In an example, with the virtual machine monitor having a memory space, synchronization by the virtual machine monitors may be as follows: one virtual machine monitor searches for a device state flag of the secure cryptographic coprocessor recorded in the memory space of another virtual machine monitor; if the device state flag indicates that the secure cryptographic coprocessor is not used, then the secure cryptographic coprocessor is currently in the idle state, so that the usage permission for the secure cryptographic coprocessor can be acquired and thus the virtual machine monitor can send the confidential computing command for confidential computing to the secure cryptographic coprocessor; upon acquisition of the confidential computing command for confidential computing, the secure cryptographic coprocessor can perform confidential computing on data and send the confidential computing result to the virtual machine monitor, so that the virtual machine monitor can obtain the confidential computing result from the secure cryptographic coprocessor and return the confidential computing result to the virtual machine to finish confidential computing for the virtual machine.

It can be seen that the data confidential computing method according to the embodiment of the present disclosure enables use of the secure cryptographic processor by a plurality of virtual machines, improving the virtual machine's utilization rate for the secure cryptographic coprocessor and enhance the data processing performance of the virtual machine.

In some embodiments, on the basis that the virtual machine monitors of different virtual machines may synchronously negotiate on use of the secure cryptographic coprocessor and the emulated device emulates the configuration of the secure cryptographic coprocessor, by accessing the device states of secure cryptographic coprocessors corresponding to different emulated devices, the usage permissions of the secure cryptographic coprocessors can be acquired when all the device states of the secure cryptographic coprocessors corresponding to different emulated devices are the idle state, and the device state of the secure cryptographic coprocessor emulated by the corresponding emulated device is adjusted to the busy state so as to acquire the usage permission for the secure cryptographic coprocessor, thereby avoiding use of the mode of pass-through in which the secure cryptographic coprocessor is passed-through to any one of the plurality of virtual machines.

It should be noted that there may be only one secure cryptographic coprocessor corresponding to different emulated devices, i.e., the number of the secure cryptographic coprocessor(s) is 1. As a result, when the device state of the secure cryptographic coprocessor corresponding to different emulated devices is the idle state, the secure cryptographic coprocessor is currently not used and the usage permission for the secure cryptographic coprocessor can be acquired.

In some embodiments, the confidential computing command sent by the virtual machine may carry a command ID and a command address parameter, the command ID is corresponding to a to-be-executed confidential computing type, e.g., encryption computing, decryption computing, Hash computing, etc.; the command address parameter may include a guest physical address (GPA) of data.

It should be noted that in confidential computing environments, the secure cryptographic coprocessor is able to access confidential resources, e.g., ciphertexts for the virtual machines and secure storage (for storage of highly-confidential keys). However, when accessing memory, the security processor and the secure cryptographic coprocessor do not use IOMMU for address translation, but only handle the host physical address (HPA) corresponding to the memory address space. Therefore, the guest physical address of the command address parameter in the confidential computing command needs to be converted into the host physical address.

The command address parameter includes the guest physical address. To acquire target data for confidential computing, the host physical address of the data, which corresponds to the memory address space, needs to be obtained. As an alternative implementation, upon acquisition of the confidential computing command through the emulated device, the virtual machine monitor can convert the guest physical address into the host physical address according to the confidential computing command, so that a processed confidential computing command can be obtained for purpose of acquiring the to-be-computed target data in memory. Further, the virtual machine monitor can send the processed confidential computing command to the secure cryptographic coprocessor and acquire the confidential computing result from the secure cryptographic coprocessor.

In some embodiments, the virtual machine monitor may establish a nested page table and the nested page table may record the address mapping relationship of a guest physical address to a host physical address, so that the guest physical address is converted into the host physical address according to the confidential computing command, which specifically may be as follows: the nested page table is queried according to the command address parameter and the guest physical address is converted into the host physical address.

It should be noted that in an alternative example, the nested page table may record the address mapping relationship of the guest physical address in the register space of the encryption hardware, and in another alternative example, the nested page table may record the address mapping relationship of the guest physical address in the memory address space. In the embodiments of the present disclosure, on the basis that the security processor and the secure cryptographic coprocessor do not use IOMMU for address translation, but processes the host physical address (HPA) only. Therefore, the virtual machine monitor may query the nested page table that records the address mapping relationship of the guest physical address in the memory address space, so as to convert the guest physical address of the command address parameter in the confidential computing command into the host physical address. This host physical address is the host physical address of the guest physical address corresponding to the memory address space, enabling the secure cryptographic coprocessor to acquire data in memory according to this host physical address and perform confidential computing. The nested page table that records the address mapping relationship of the guest physical address in the memory address space may be to send an address query command to memory through the security processor to acquire the memory address space, and further establish the mapping relationship of the guest physical address and the host physical address of the memory address space based on the acquired memory address space.

It should be further noted that on the basis that the virtual machine monitor emulates the configuration of the secure cryptographic coprocessor through the emulated device, the virtual machine sends the confidential computing command to the emulated device, and can enter into a virtual machine exit mode after obtaining the returned confidential computing result through the virtual machine monitor.

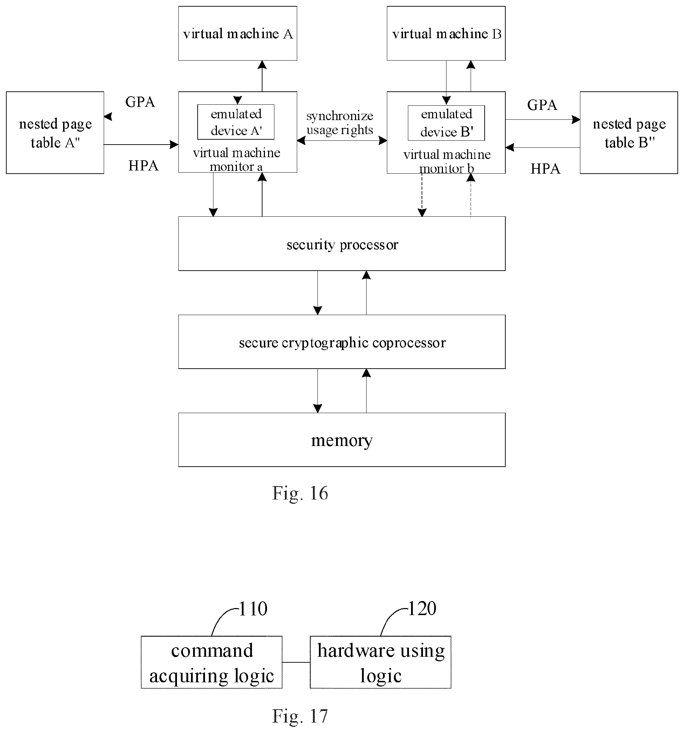

Fig. 16 schematically shows a schematic interaction diagram of access to a secure cryptographic coprocessor by a plurality of virtual machines according to the embodiment of the present disclosure. As shown in Fig. 16, virtual machines A and B are respectively corresponding to virtual machine monitors a and b, and the emulated device layer of the virtual machine monitor a is provided with an emulated device A' emulating the configuration of the secure cryptographic coprocessor, the emulated device layer of the virtual machine monitor b is provided with an emulated device B' emulating the configuration of the secure cryptographic coprocessor; the virtual machine monitor a queries the nested page table A" correspondingly and the virtual machine monitor b queries the nested page table B" correspondingly. In addition, the virtual machines A and B may be secure virtual machines. The nested page table A" and the nested page table B" record the address mapping relationships of the guest physical addresses (GPA) of the corresponding virtual machines to the host physical addresses (HPA) in the memory address spaces.

Based on configuration emulation for the secure cryptographic coprocessor by the emulated devices A' and B', the virtual machines A and B may send a data confidential computing command to the corresponding emulated devices A' and B'. Further, the virtual machine monitors A and B can acquire the data confidential computing command sent to the emulated devices by the corresponding virtual machines, and query the corresponding nested page tables to convert the guest physical address in the data confidential computing command into the host physical address. Further, the virtual machine monitors a and b may mutually synchronize the usage permissions for the secure cryptographic coprocessor, e.g., when the virtual machine monitor a synchronously accesses the virtual machine monitor b, a result of the virtual machine monitor b not using the secure cryptographic coprocessor is obtained and then the virtual machine monitor a records the device state of the secure cryptographic coprocessor as the "busy state" indicating use by the corresponding virtual machine A; further, the virtual machine monitor a can send, through the security processor, the data confidential computing command containing the host physical address to the secure cryptographic coprocessor, so that the secure cryptographic coprocessor can acquire the target data in memory according to the host physical address, perform confidential computing on the target data, and send the confidential computing result to the virtual machine monitor a through the security processor; finally, the virtual machine monitor a returns this confidential computing result to the virtual machine A.

It thus can be seen that the data confidential computing method according to the embodiment of the present disclosure enables use of the secure cryptographic coprocessor by a plurality of virtual machines, thereby improving the virtual machine's utilization rate for the secure cryptographic coprocessor and enhancing the data processing performance of the virtual machines.

In some embodiments, since the secure cryptographic coprocessor processes a confidential computing task in the confidential computing environment, the virtual machine needs to verify transmission of the confidential computing command to determine the security of information interaction. In addition, messages need to be transferred to the secure cryptographic coprocessor via the security processor based on considerations of data security. In an example, the security processor may be used for key agreement to generate a key pair, so as to obtain a chip private key and a chip public key. In addition, the security processor can transmit the chip public key to the virtual machine, which saves the chip public key. Therefore, as an alternative implementation, the confidential computing command may also carry a signature file, which is used to use the chip private key to sign the signature file through the security processor forwarding the confidential computing command to the secure cryptographic coprocessor, e.g., the security processor uses the chip private key for encryption of the signature file, so that the virtual machine uses the chip public key matched with the chip private key, for signature verification of the signature file in the confidential computing result, in order to determine that the confidential computing command is transferred, through the security processor, to the secure cryptographic coprocessor and then processed there.

It thus can be seen that the data confidential computing method according to the embodiment of the present disclosure enables use of the secure cryptographic coprocessor by a plurality of virtual machines, thereby improving the virtual machine's utilization rate for the secure cryptographic coprocessor and enhancing the data processing performance of the virtual machines.

The data confidential computing apparatus provided in the embodiment of the present disclosure will be introduced below. The content of the apparatus described hereinafter may be considered as the virtual machine monitor corresponding to the virtual machine being a functional module required to be set to implement the data confidential computing method according to the embodiment of the present disclosure. The content described hereinafter can be cross-referenced with the content described hereinabove.

As an alternative implementation, Fig. 17 schematically shows an alternative block diagram of a data confidential computing apparatus according to the embodiment of the present disclosure. This apparatus may be applied to a virtual machine monitor. With reference to Fig. 17, this apparatus may include: a command acquiring logic 110 and a hardware using logic 120.

The command acquiring logic 110 is used to acquire a confidential computing command for an emulated device sent by a virtual machine, the emulated device is used to emulate a program of a secure cryptographic coprocessor, and the secure cryptographic coprocessor is encryption hardware configured according to the encryption hardware configuration method as described above.

The hardware using logic 120 is used to acquire a usage permission of the secure cryptographic coprocessor so as to obtain a confidential computing result from the secure cryptographic coprocessor according to the confidential computing command and return the confidential computing result to the virtual machine.

Alternatively, the step that the hardware using logic 120 is used to acquire the usage permission for the secure cryptographic coprocessor includes:
acquiring, by accessing device states of secure cryptographic coprocessors emulated by different emulated devices, the usage permission of the secure cryptographic coprocessors when all the device states of the secure cryptographic coprocessors emulated by the different emulated devices are the idle state, and adjusting a device state of a secure cryptographic coprocessor emulated by a corresponding emulated device to the busy state.

Alternatively, the confidential computing command carries a command ID and a command address parameter, the command ID is corresponding to a to-be-executed confidential computing type, the command address parameter includes a guest physical address.

The step of obtaining a confidential computing result from the encryption hardware according to the confidential computing command in the hardware using logic 120 includes:
converting the guest physical address into a host physical address according to the confidential computing command to obtain a processed confidential computing command;
sending the processed confidential computing command to the secure cryptographic coprocessor and acquiring the confidential computing result from the secure cryptographic coprocessor.

Alternatively, the converting the guest physical address into a host physical address according to the confidential computing command may specifically include: querying a nested page table according to the command address parameter to convert the guest physical address into the host physical address; the nested page table records an address mapping relationship of the guest physical address to the host physical address.

Also provided in the embodiments of the present disclosure is a computer system that may include: a virtual machine monitor, a plurality of virtual machines, and encryption hardware. The virtual machine monitor includes the encryption hardware configuration apparatus as described above, or the data confidential computing apparatus as described above.

Alternatively, the virtual machine monitor is provided with an emulated device layer, the emulated device layer is provided with the emulated devices as described in the above encryption hardware configuration method, or the emulated devices as described in the above data confidential computing method.

Also provided in the embodiments of the present disclosure is an electronic device that may include a memory and a processor. A computer program runnable by the processor is stored on the memory, and the processor, when running the computer program, executes the steps in the encryption hardware configuration method as described above or in the data confidential computing method as described above.

Also provided in the embodiments of the present disclosure is a storage medium having one or more computer-executable instructions stored therein that, when executed, implement the encryption hardware configuration method and/or the data confidential computing method according to the embodiments of the present disclosure.

Multiple embodiment schemes provided in the embodiments of the present disclosure have been described hereinabove. The alternative implementations described in various embodiment schemes may be combined and cross-referenced with each other without causing any conflict, so as to extend a plurality of possible embodiment schemes. All these embodiment schemes may be regarded as the embodiment schemes exposed and disclosed in the embodiments of the present disclosure.

Although the embodiments of the present disclosure have been disclosed as above, the present disclosure is not limited to this. Any person skilled in the art can make various changes and modifications without departing from the spirit and scope of the present disclosure, so the scope of protection of the present disclosure shall be subject to the scope defined by the claims.

## Claims

1. A configuration method of encryption hardware, comprising:
maintaining a device state of encryption hardware bound to a plurality of emulated devices, wherein the device state comprises an idle state and a busy state; wherein one emulated device corresponds to one virtual machine, and the plurality of emulated devices are bound to the encryption hardware so that a plurality of virtual machines share the encryption hardware through corresponding emulated devices; and
processing a usage request of a virtual machine for the encryption hardware through an emulated device corresponding to the virtual machine based on the device state of the encryption hardware, so that the virtual machine uses the encryption hardware, wherein the virtual machine is any one of the plurality of virtual machines.

2. The configuration method of encryption hardware according to claim 1, wherein the processing a usage request of a virtual machine for the encryption hardware through an emulated device corresponding to the virtual machine based on the device state of the encryption hardware comprises:
acquiring, when the device state of the encryption hardware is the idle state, a usage request of a first virtual machine for requesting usage of the encryption hardware through a first emulated device corresponding to the first virtual machine; wherein the first virtual machine is any one of the plurality of virtual machines; and
making a response to the usage request through the first emulated device so that the first virtual machine uses the encryption hardware.

3. The configuration method of encryption hardware according to claim 2, further comprising:
adjusting the device state of the encryption hardware to the busy state through the first emulated device so that a second virtual machine stops sending a usage request until the device state of the encryption hardware is adjusted to the idle state; wherein the second virtual machine is a virtual machine different from the first virtual machine, among the plurality of virtual machines.

4. The configuration method of encryption hardware according to any of claims 1 to 3, wherein the maintaining a device state of encryption hardware bound to a plurality of emulated devices comprises:
recording the device state of the encryption hardware bound to the plurality of emulated devices in a shared memory space, wherein the shared memory space is configured to allow the plurality of emulated devices to read and write.

5. The configuration method of encryption hardware according to claim 4, wherein the adjusting the device state of the encryption hardware to the busy state through the first emulated device corresponding to the first virtual machine comprises:
adjusting the device state of the encryption hardware recorded in the shared memory space to the busy state through the first emulated device corresponding to the first virtual machine.

6. The configuration method of encryption hardware according to claim 5, further comprising:
adjusting the device state of the encryption hardware recorded in the shared memory space to the idle state through the first emulated device corresponding to the first virtual machine when the first virtual machine finishes using the encryption hardware.

7. The configuration method of encryption hardware according to any of claims 1 to 6, further comprising:
mapping a register address space of the encryption hardware for the virtual machine through the emulated device corresponding to the virtual machine when the virtual machine is started.

8. The configuration method of encryption hardware according to claim 7, wherein the mapping a register address space of the encryption hardware for the virtual machine through the emulated device corresponding to the virtual machine when the virtual machine is started comprises:
acquiring a query request of the virtual machine for the register address space of the encryption hardware through the emulated device corresponding to the virtual machine when the virtual machine is started; and
querying address information of the register address space through the emulated device corresponding to the virtual machine, and mapping the register address space of the encryption hardware for the virtual machine according to the address information of the register address space that is queried.

9. The configuration method of encryption hardware according to claim 8, wherein the mapping the register address space of the encryption hardware for the virtual machine according to the address information of the register address space that is queried comprises:
establishing a nested page table according to the address information of the register address space, wherein the nested page table is configured to record mapping from a guest physical address of the virtual machine to an address space of the encryption hardware.

10. The configuration method of encryption hardware according to any of claims 2 to 6, wherein the making a response to the usage request through the first emulated device so that the first virtual machine uses the encryption hardware comprises:
writing an input/output page table of the first virtual machine into an input/output memory management unit through the first emulated device, wherein the input/output page table records an address mapping relationship from a guest physical address to a host physical address.

11. The configuration method of encryption hardware according to any of claims 1 to 10, wherein the encryption hardware comprises an ordinary cryptographic coprocessor and/or a secure cryptographic coprocessor; wherein the ordinary cryptographic coprocessor is configured to execute a normal computing task in a normal computing environment; and the secure cryptographic coprocessor is configured to execute a confidential computing task in a confidential computing environment.

12. The configuration method of encryption hardware according to claim 11, wherein the normal computing environment is isolated from the confidential computing environment, the normal computing environment is configured to execute the normal computing task, and the confidential computing environment is configured to execute the confidential computing task.

13. A configuration apparatus of encryption hardware, comprising:
a state maintaining logic, configured to maintain a device state of encryption hardware bound to a plurality of emulated devices, wherein the device state comprises an idle state and a busy state; wherein one emulated device corresponds to one virtual machine, and the plurality of emulated devices are bound to the encryption hardware so that a plurality of virtual machines share the encryption hardware through corresponding emulated devices; and
a request processing logic, configured to process a usage request of a virtual machine for the encryption hardware through an emulated device corresponding to the virtual machine based on the device state of the encryption hardware, so that the virtual machine uses the encryption hardware, wherein the virtual machine is any one of the plurality of virtual machines.

14. The configuration apparatus of encryption hardware according to claim 13, further comprising:
an address mapping logic, configured to map a register address space of the encryption hardware for the virtual machine through the emulated device corresponding to the virtual machine when the virtual machine is started.

15. A data confidential computing method, comprising:
acquiring a confidential computing command for an emulated device sent by a virtual machine, wherein the emulated device is configured to emulate configuration of a secure cryptographic coprocessor, the secure cryptographic coprocessor is encryption hardware configured according to the configuration method of encryption hardware of claim 1; and
acquiring a usage permission of the secure cryptographic coprocessor so as to obtain a confidential computing result from the secure cryptographic coprocessor according to the confidential computing command and return the confidential computing result to the virtual machine.

16. The data confidential computing method according to claim 15, wherein the acquiring a usage permission of the secure cryptographic coprocessor comprises:
acquiring, by accessing device states of secure cryptographic coprocessors emulated by different emulated devices, the usage permission of the secure cryptographic coprocessors when all the device states of the secure cryptographic coprocessors emulated by the different emulated devices are the idle state, and adjusting a device state of a secure cryptographic coprocessor emulated by a corresponding emulated device to the busy state.

17. The data confidential computing method according to claim 15 or 16, wherein the confidential computing command carries a command ID and a command address parameter, wherein the command ID corresponds to a to-be-executed confidential computing type, the command address parameter comprises a guest physical address;
the obtaining a confidential computing result from the secure cryptographic coprocessor according to the confidential computing command comprises:
converting the guest physical address into a host physical address according to the confidential computing command to obtain a processed confidential computing command; and
sending the processed confidential computing command to the secure cryptographic coprocessor and acquiring the confidential computing result from the secure cryptographic coprocessor.

18. The data confidential computing method according to claim 17, wherein the converting the guest physical address into a host physical address according to the confidential computing command comprises:
querying a nested page table according to the command address parameter to convert the guest physical address into the host physical address; wherein the nested page table records an address mapping relationship from the guest physical address to the host physical address.

19. The data confidential computing method according to claim 17 or 18, wherein the confidential computing command further carries a signature file, wherein the signature file is configured to use a chip private key to sign the signature file through a security processor forwarding the confidential computing command to the secure cryptographic coprocessor, so that the virtual machine utilizes a chip public key matched with the chip private key, for signature verification of the signature file in the confidential computing result.

20. A data confidential computing apparatus, comprising:
a command acquiring logic, configured to acquire a confidential computing command for an emulated device sent by a virtual machine, wherein the emulated device is configured to emulate a program of a secure cryptographic coprocessor, the secure cryptographic coprocessor is encryption hardware configured according to the configuration method of encryption hardware of claim 1; and
a hardware using logic, configured to acquire a usage permission of the secure cryptographic coprocessor so as to obtain a confidential computing result from the secure cryptographic coprocessor according to the confidential computing command and return the confidential computing result to the virtual machine.

21. A computer system, comprising: a virtual machine monitor, a plurality of virtual machines, and encryption hardware, wherein the virtual machine monitor comprises the configuration apparatus of encryption hardware according to any of claims 13 to 14, or the data confidential computing apparatus of claim 20.

22. The computer system according to claim 21, wherein the virtual machine monitor is provided with an emulated device layer, the emulated device layer is provided with the emulated devices used in the configuration method of encryption hardware according to any of claims 1 to 12, or the emulated devices used in the data confidential computing method according to any of claims 15 to 19.

23. An electronic device, comprising a memory and a processor, wherein a computer program runnable by the processor is stored on the memory, and the processor, when runs the computer program, executes steps in the configuration method of encryption hardware according to any of claims 1 to 12, or in the data confidential computing method according to any of claims 15 to 19.

24. A storage medium, wherein the storage medium stores one or more computer-executable instructions, when the one or more computer-executable instructions are executed, the configuration method of encryption hardware according to any of claims 1 to 12, and/or the data confidential computing method according to any of claims 15 to 19 is implement.
